# FASCICULE DE BREVET EUROPEEN

(11) **EP 1 457 409 B1**
(45) Date de publication et mention de la délivrance du brevet: **15.11.2006**
(21) Numéro de dépôt: 04290662.8
(22) Date de dépôt: 11.03.2004
(51) Int. Cl.: B62D 33/033

(54) **Dispositif de verrouillage de ranchers pour véhicules de chargement**
Riegelvorrichtung von Runge eines Lastkraftwagens
Locking device of stanchions for lorries

(30) Priorité: 11.03.2003 ES 200300578
(43) Date de publication de la demande: 15.09.2004
(73) Titulaire: Mecadetol, S.A., 31119 Imarcoain (Navarra) (ES)
(72) Inventeur: Zuzaga Fernandez, Juan Manuel, c/Tudela, s/n; 31119 Imarcoain (Navarra) (ES)
(74) Mandataire: Intes, Didier Gérard André

(56) Documents cités:
- EP-A- 0 571 665
- EP-A- 0 940 326
- EP-A- 1 112 917
- EP-A- 1 354 790
- WO-A-01/51339
- ES-A- 2 143 933

## Description

La présente invention concerne les piliers que l'on dispose pour l'incorporation de la fermeture latérale des plates-formes de chargement de véhicules, proposant une solution améliorée de l'ancrage destiné à réaliser la fixation desdits piliers sur la plate-forme correspondante.

### Contexte de l'invention

La disposition de piliers pour l'incorporation d'une fermeture latérale dans les plates-formes de chargement de camions, remorques ou moyens semblables est connue, lesquels piliers doivent rester dans une position fixe sur la plate-forme correspondante pour remplir leur fonction, mais avec la possibilité d'être retirés afin de libérer la zone qu'ils occupent, quand ceci sera requis lors d'opérations de chargement ou pour tout autre circonstance.

Dans ce sens, les piliers peuvent être démontés, de sorte que, dans la position sur la plate-forme, on les fixe, grâce à un ancrage duquel ils sont amovibles lorsque cela est nécessaire ; cette solution est simple quant aux moyens de fixation des piliers, mais l'inconvénient est que les piliers sont difficiles à retirer et à fixer par rapport à la plate-forme de l'application.

D'autres solutions existent dans lesquelles les piliers sont mobiles, de sorte qu'il n'est pas indispensable de les retirer de la plate-forme, mais ils doivent être disposés dans un montage de coulissement par rapport à un rail de support supérieur, le long duquel on peut déplacer les piliers jusqu'à une position dans laquelle ils ne gênent pas, sans qu'il soit nécessaire de les démonter. Cependant, dans ce cas, un mécanisme d'ancrage est nécessaire pour fixer le pilier de façon à ce qu'il soit immobilisé sur la plate-forme correspondante.

Un tel mécanisme d'ancrage est décrit dans le document PCT WO98/24679, et consiste en un support fixe sur la plate-forme de chargement, tandis que le pilier comprend une bielle reliée à un levier de commande qui peut basculer entre une position de fermeture et une position d'ouverture, faisant en sorte que le levier crée un appui de rotation sur un siège du support fixe par rapport à la plate-forme afin d'élever le pilier jusqu'à une position de fermeture sur ledit support fixé à la plate-forme.

Avec ce mécanisme le levier de commande supporte le poids de tout le pilier dans les manipulations de fermeture et d'ouverture de l'ancrage, ce qui rend ces opérations difficiles et avec le risque, en outre, que le levier tombe brusquement et provoque des accidents s'il est échappé pendant sa manipulation.

D'autres solutions existent, comme celle du Modèle d'utilité 9902995, dans lesquelles le pilier dispose d'une structure articulée qui permet d'établir un appui basculant pour amener le pilier par une simple poussée jusqu'à la position d'appui sur la plate-forme, comprenant un levier d'actionnement d'un ergot d'arrêt permettant d'obtenir le verrouillage d'ancrage.

Avec cette solution, le levier de manipulation de la fermeture et de l'ouverture de l'ancrage fonctionne uniquement sur l'ergot d'arrêt de fermeture et ne supporte pas le poids du pilier, ce qui rend la manipulation plus précise et évite le caractère dangereux de la solution précédente décrite dans le document PCT WO98/24679, mais l'ensemble du mécanisme est très compliqué, du fait du grand nombre d'éléments, d'articulations, de ressorts et de bielles, que sa réalisation implique.

Il existe aussi un mécanisme de fermeture d'ancrage décrit dans la publication de la demande de brevet européen EP 0940362A correspondant au préambule de la revendication 1.

### Objet de l'invention

Selon l'invention il est proposé une fermeture qui permet de réaliser l'ancrage desdits piliers des plates-formes de chargement dans des conditions de manipulation précises et sans risque, avec un mécanisme de réalisation très simple. La solution selon l'invention est une fermeture d'ancrage telle que décrite par la revendication 1.

Cette fermeture qui est l'objet de l'invention comprend un support d'appui qui est disposé de manière fixe sur la plate-forme de l'application, tandis qu'un élément basculant d'appui et un levier de blocage sont articulés par rapport au pilier, en déterminant à chaque extrémité dudit levier des crochets, avec l'un desquels il est possible de l'accrocher au support d'appui fixé sur la plate-forme, tandis que l'autre extrémité définit un crochet par rapport à un ergot de maintien qui doit être incorporé lors du montage sur le pilier lui-même.

L'extrémité du levier destinée à s'accrocher sur le support fixé à la plate-forme, est constituée d'un picot capable de s'insérer dans un logement défini par le support d'accrochage, de sorte que dans la position d'accrochage ledit picot du levier constitue en même temps une butée d'arrêt de l'extrémité de l'élément basculant lors de l'appui sur le support.

L'ergot d'accrochage de l'autre extrémité du levier est un élément articulé qui a tendance à tomber dans une position d'accrochage proprement dite, par rapport auquel l'extrémité du levier détermine, à l'extérieur, un appui coulissant qui lui permet de se déplacer jusqu'à la position d'accrochage, tandis que pour la libération du crochet l'ergot est actionnable manuellement en le tournant sur son montage articulé.

L'incorporation du mécanisme dans le montage sur le pilier se réalise de préférence au moyen d'une plaque accessoire, sur laquelle l'élément basculant d'appui du pilier et l'ergot d'arrêt du levier actionneur sont disposés dans une même articulation de montage, tandis que le levier actionneur se place dans une autre articulation, ladite plaque accessoire s'encastrant dans le pilier, par rapport auquel elle se fixe de préférence au moyen d'un rivetage de fixation.

On obtient ainsi une fermeture constituée de très peu d'éléments et dont le montage est facile, puisque le levier actionneur comprend la cale de blocage de l'ancrage, formant un ensemble sans ressorts ni bielles de liaison entre l'élément de manipulation et l'élément de blocage, lesquels sont intégrés dans une même pièce.

D'autre part, l'actionnement du blocage et du déblocage de l'ancrage requiert peu d'effort et n'est pas dangereux, obtenant en outre une totale sécurité lors du blocage de la fermeture, puisque le levier actionneur est retenu par un crochet qui l'empêche de monter vers la position d'ouverture s'il n'est pas libéré, tandis que ce même levier retient sur le support d'appui l'élément basculant qui supporte le pilier.

Il en résulte que la fermeture d'ancrage qui est l'objet de l'invention présente des caractéristiques avantageuses qui lui confèrent une durée de vie correcte et un caractère préférentiel par rapport aux solutions connues pour la même application.

### Brève description des dessins

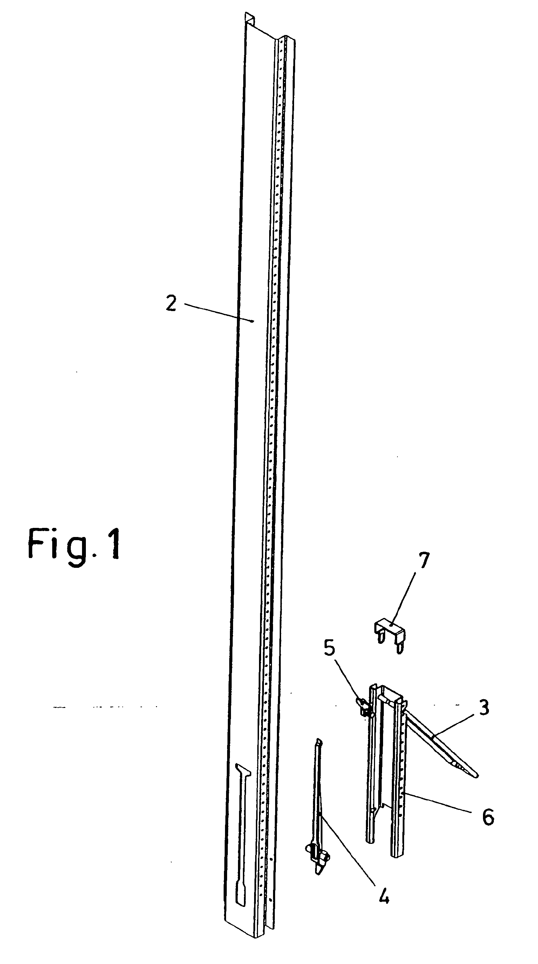

La figure 1 montre en perspective éclatée un pilier avec la fermeture d'ancrage qui est l'objet de l'invention.

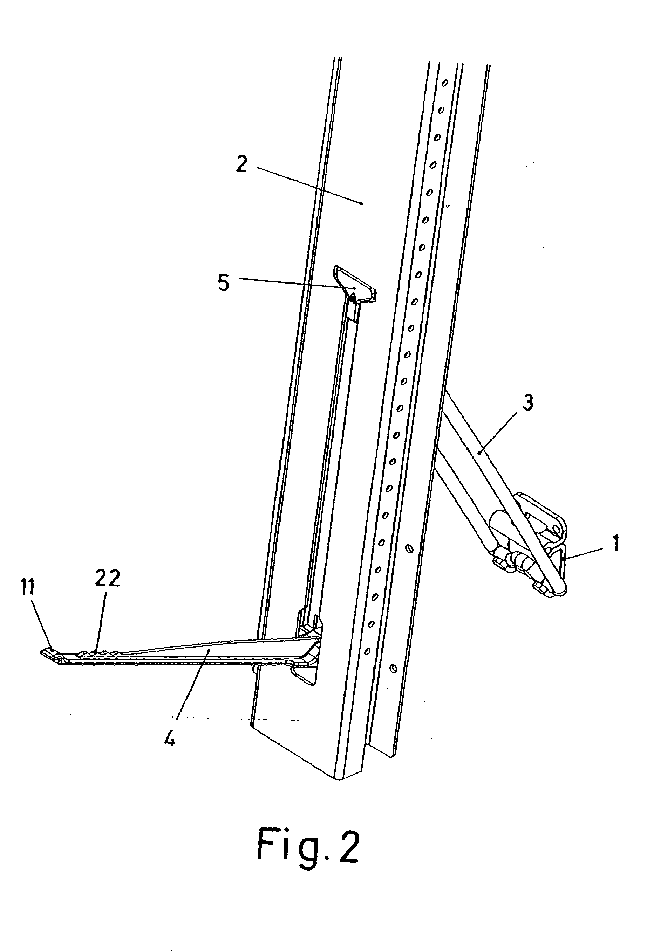

La figure 2 est une vue en perspective partiellement agrandie du pilier antérieur avec la fermeture d'ancrage montée et dans une position ouverte en appui sur le support correspondant qui doit être fixé sur la plate-forme de chargement de l'application.
La figure 3 est une vue en perspective comme la précédente vue du côté postérieur du pilier.

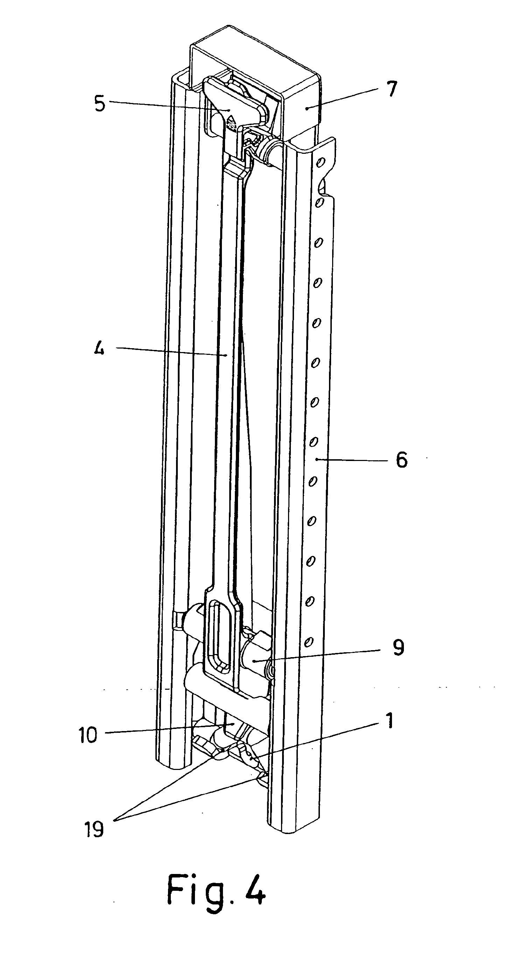

La figure 4 est une vue en perspective de la fermeture d'ancrage, sans le pilier, en position fermée.
Les figures 5 et 6 sont respectivement des vues en perspective du côté antérieur et du côté postérieur, du levier actionneur de la fermeture d'ancrage.
Les figures 7 et 8 sont respectivement des vues, de face et de profil, de l'élément basculant d'appui de la fermeture sur le support fixe par rapport à la plate-forme de l'application.
La figure 9 est une vue en perspective de l'ergot de maintien du levier actionneur en position de fermeture.
La figure 10 est une vue en perspective du support d'appui pour l'enclenchement de la fermeture.
La figure 11 est une vue en perspective de la plaque de montage du mécanisme de fermeture sur le pilier de l'application.
La figure 12 est une vue en perspective du couvercle de fermeture supérieur de la plaque de montage afin d'éviter l'entrée de salissures.
Les figures 13, 14, 15 et 16 montrent en vue latérale des positions successives de la séquence de fermeture de l'ancrage d'un pilier avec le mécanisme de l'invention, jusqu'au début de l'accrochage dans le support fixe d'appui.
Les figures 17 et 18 sont chacune des vues latérales du mécanisme de fermeture dans deux positions de la séquence de verrouillage de sécurité du levier actionneur au moyen de l'ergot de maintien.

### Description du mode de réalisation préféré

L'invention concerne un mécanisme de fermeture, permettant de réaliser l'ancrage de piliers, qui est disposé pour l'incorporation de fermetures latérales dans les plates-formes de chargement de camions, remorques ou véhicules semblables.

Ladite fermeture comprend un support (1) d'ancrage, destiné à être fixé sur la structure de la plate-forme de chargement dans laquelle est disposé le pilier (2) de l'application dans lequel est incorporé le mécanisme de fermeture.

Le mécanisme comprend un élément basculant (3) disposé dans un montage articulé par rapport au pilier (2), ledit élément basculant (3) étant prévu pour s'appuyer au niveau de son extrémité libre sur le support fixe (1).

Dans le montage articulé du mécanisme se trouve également un levier (4) susceptible de s'accrocher, au niveau d'une extrémité, au support fixe (1) pour réaliser le blocage de la fermeture de l'ancrage, tandis que l'autre extrémité est prévue pour s'accrocher à un ergot d'arrêt (5) qui fait également partie du mécanisme.

Selon une réalisation pratique, il est prévu que le pilier (2) soit conçu comme un profilé en forme d'oméga, le mécanisme de fermeture étant disposé dans le montage par rapport à une plaque (6), sur laquelle on réalise le montage articulé de l'élément basculant (3), l'ergot (5) étant incorporé dans la même articulation, tandis que le levier (4) est disposé de manière articulée à un autre endroit sur ladite plaque (6).

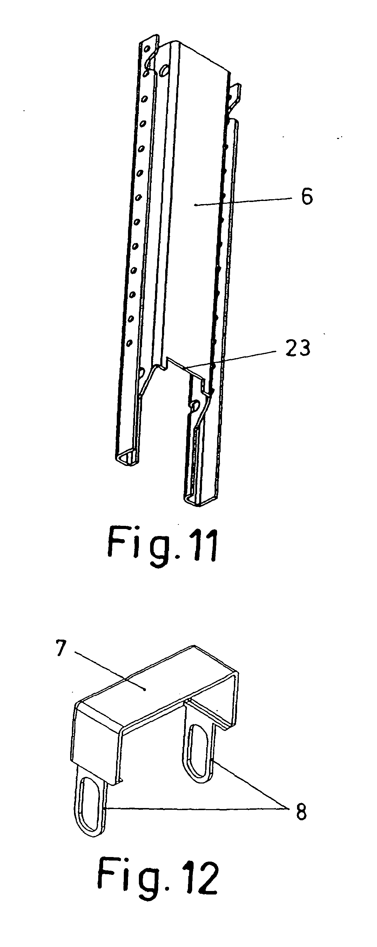

Avec le mécanisme ainsi disposé sur la plaque (6), celle-ci est incorporée dans le levier (2), et fixée par rapport à celui-ci de préférence au moyen de rivetages latéraux, même si ladite fixation peut également être réalisée par tout autre moyen conventionnel, tandis que sur la partie supérieure de la plaque (6) un couvercle de fermeture (7) est incorporé, afin que des salissures ne puissent pas pénétrer. Le couvercle (7), comme on le voit sur la figure 12, possède quelques pattes (8) au moyen desquelles s'effectue un montage par emboîtement par rapport à la plaque (6).

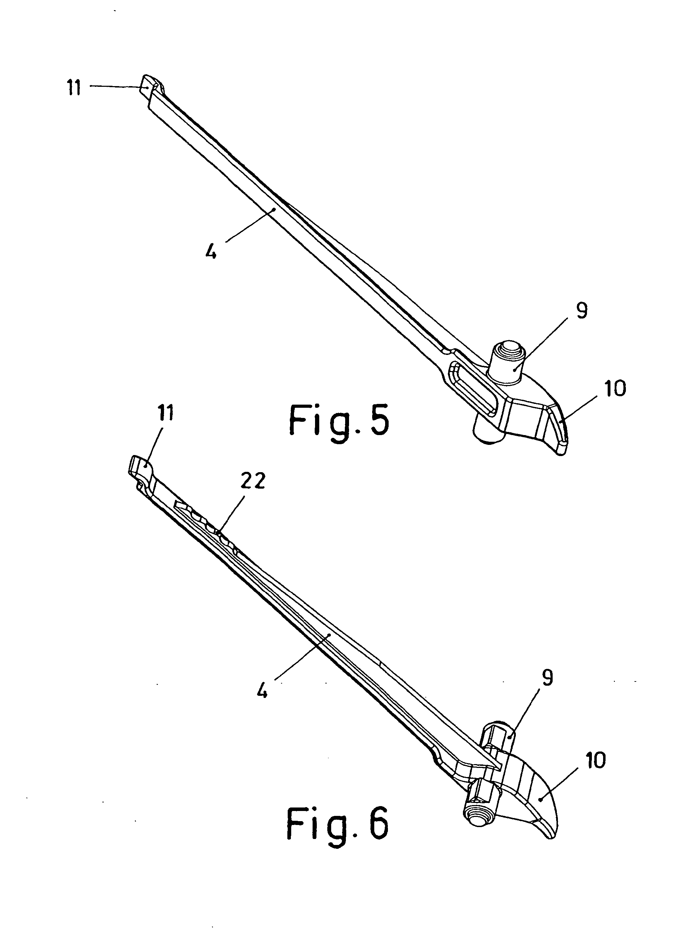

Le levier (4), comme on le voit sur les figures 5 et 6, possède à proximité d'une des extrémités un usinage (9) en forme d'axe, grâce auquel le montage articulé sur la plaque (6) est réalisé, définissant au niveau de l'extrémité proche dudit usinage (9) un picot (10), à l'aide duquel l'accrochage de fermeture par rapport au support fixe (1) est possible.

A l'extrémité opposée à l'axe (9), le levier (4) définit un élément (11) en forme de dent, grâce auquel l'accrochage par rapport à l'ergot de maintien (5) est possible.

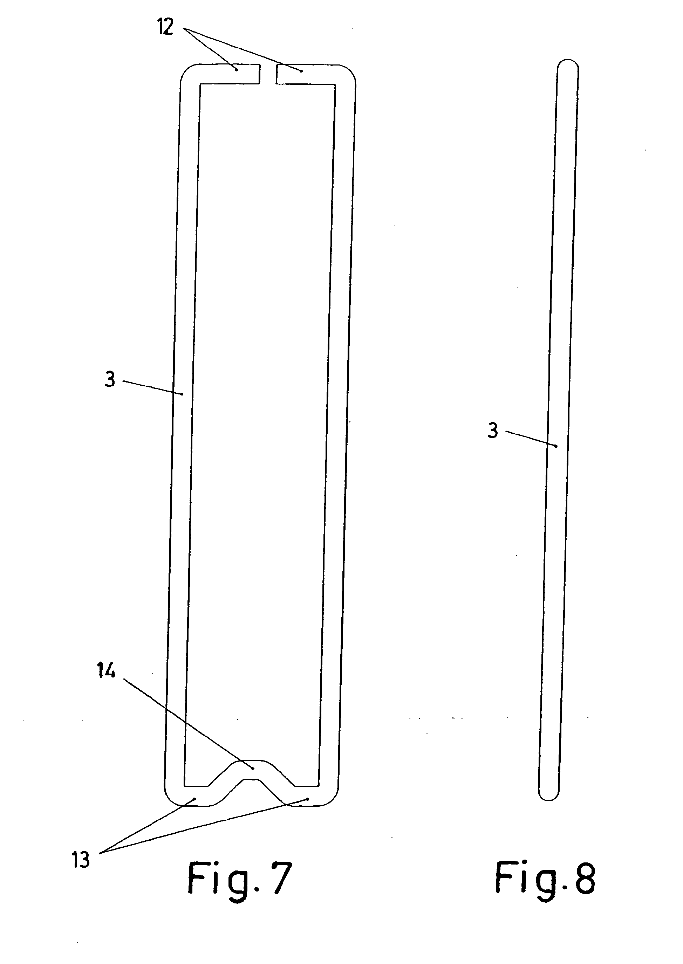

L'élément basculant (3) est constitué, comme cela est représenté sur les figures 7 et 8, d'un châssis formé d'une barre rigide, les extrémités (12) de ladite barre étant face à face à une extrémité du châssis et le montage articulé sur la plaque (6) étant réalisé au moyen desdites extrémités en insérant en même temps sur ces extrémités (12) l'ergot (5), lequel reste ainsi disposé à son tour dans la même articulation de montage dudit élément basculant (3).

Au niveau de son extrémité opposée à celle du montage, le châssis constituant ledit élément (3) définit des coudes (13) qui s'appuie sur le support fixe (1) et un pliage central (14), au moyen duquel une butée contre le picot (10) du levier (4) est réalisée lors dudit appui sur le support (1), dans la position fermée du mécanisme.

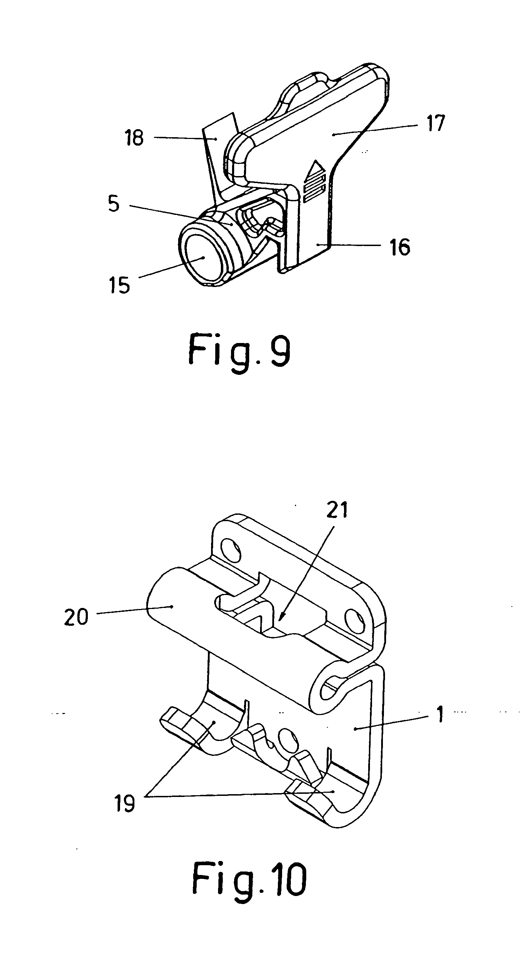

L'ergot (5), comme cela est représenté sur la figure 9, comporte un trou transversal (15) pour l'incorporation lors du montage sur les extrémités (12) de la barre de l'élément basculant (3), le corps comportant ledit trou (15) étant associé à un usinage qui définit une dent (16) en bas et qui au-dessus comporte une pale (17) fonctionnant au moyen de boutons poussoir d'actionnement. Une patte (18) flexible sortant radialement du corps, à l'arrière dudit usinage, sert de butée élastique pour faire tourner ledit ergot (5) dans la position de montage, de sorte que la dent (16) reste orientée vers le bas.

Le support (1), comme on le voit sur la figure 10, est constitué d'une plaque qui définit dans sa partie inférieure des sièges (19), pour l'appui rotatif des coudes (13) de l'élément basculant (3), et qui définit au-dessus desdits sièges (19) un pliage cylindrique (20) dans la zone médiane duquel est définie une ouverture (21), dans laquelle l'insertion du picot (10) du levier (4) pour réaliser le blocage de la fermeture est possible. Dans le pliage cylindrique (20), il est prévu d'insérer un boulon de renforcement, permettant d'obtenir une répartition des efforts transversaux tout au long du pliage cylindrique (20), évitant la déformation de la zone centrale de celui-ci par l'action du picot (10) du levier (4) lors du blocage de la fermeture.

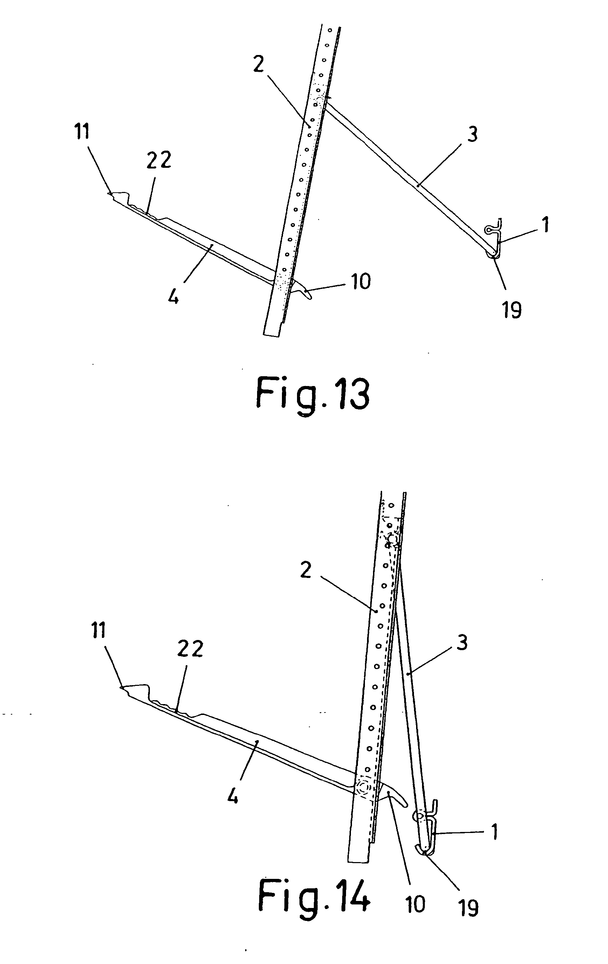

Ainsi, pour réaliser l'ancrage du pilier (2) sur la plate-forme de l'application, l'élément basculant (3) s'appuie d'abord sur les sièges (19) au niveau de son extrémité libre qui détermine le support (1), comme cela est représenté sur la figure 13.

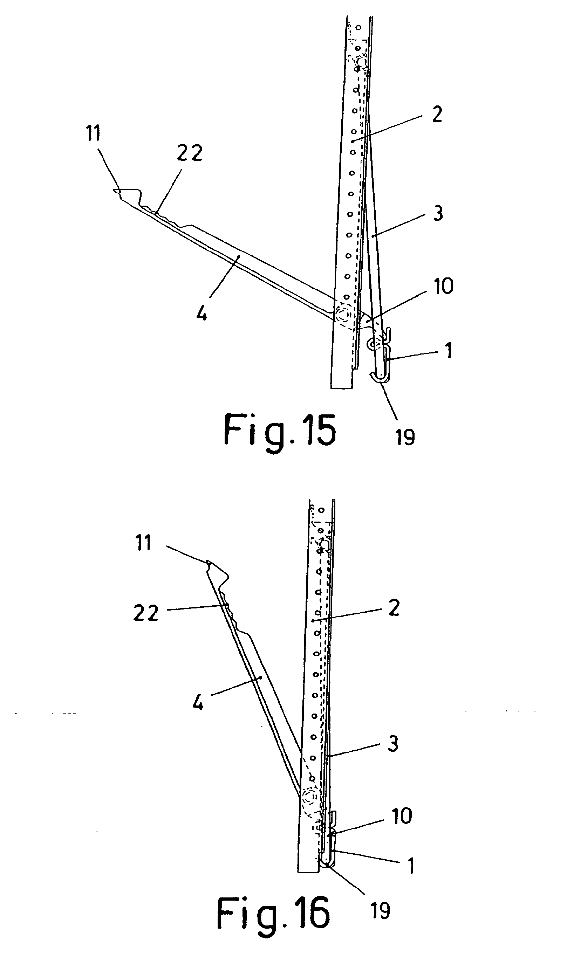

Grâce à une action de poussée du même pilier (2) vers la plate-forme dans laquelle est fixé le support (1), on obtient un basculement de l'élément (3) en pivotant sur les sièges (19), grâce auquel le pilier (2) s'approche de la plate-forme, en même temps qu'il s'élève, comme cela est représenté sur la figure 14.

Grâce à ce mouvement du pilier (2) le picot d'extrémité (10) du levier (4) parvient jusqu'au support (1) comme cela est représenté sur la figure 15, de sorte que, en continuant la poussée sur le pilier (2), qui peut être accompagnée par le basculement du levier (4) le picot (10) s'insère dans l'ouverture (21) du support (1) comme cela est représenté sur la figure 16.

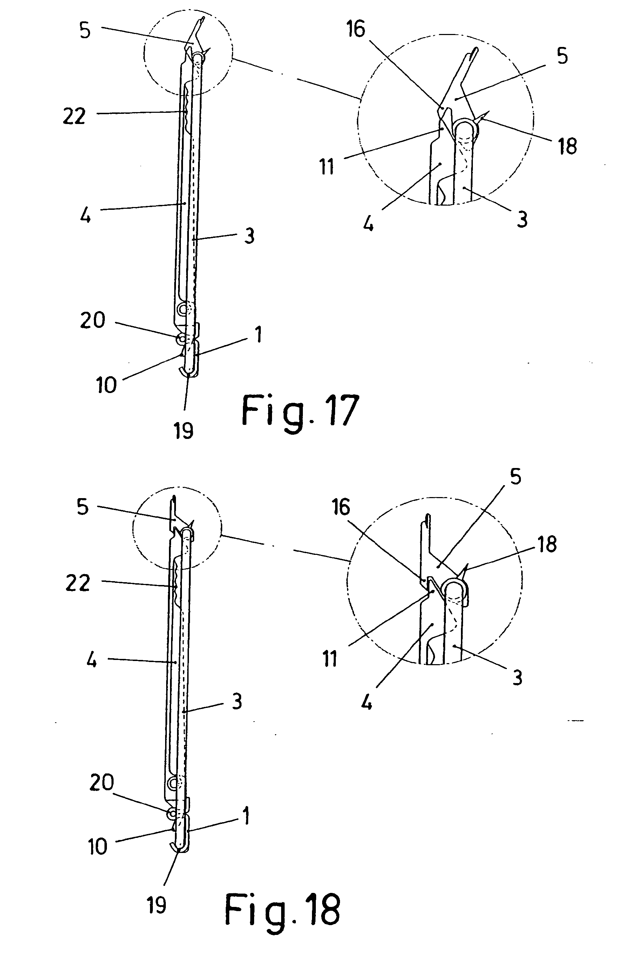

Lorsque le levier (4) parvient à la position qui coïncide avec le pilier (2), la dent à l'extrémité (11) dudit levier (4) entre en contact avec l'ergot (5), de sorte qu'en s'appuyant contre celui-ci, grâce à des plans inclinés correspondants sur les deux pièces, la poussée du levier (4) fait basculer l'ergot (5), comme cela est représenté sur la figure 17, avec lequel la dent (11) du levier (4) parvient à abaisser la dent (11) de l'ergot (5), lequel une fois abaissé retombe à la position initiale, comme cela est représenté sur la figure 18.

Le levier (4) est ainsi maintenu au moyen de l'ergot (5) dans cette position, avec une fixation qui empêche le basculement vers l'arrière, tandis que le picot (10) reste inséré dans le support fixe (1), qui assure une fixation qui maintient le pilier (2) fixe dans l'ancrage. Dans cette position, le picot (10) du levier (4) constitue, en outre, un couvercle par rapport au pliage (14) de l'élément basculant (3), empêchant que celui-ci puisse sortir de l'appui dans les sièges (19) du support (1) lequel assure à son tour la stabilité de la fermeture.

Pour débloquer la fermeture il est nécessaire de libérer le levier (4) du maintien de l'ergot (5), ce qui peut se réaliser au moyen d'une action précise de poussée sur la pale (17) dudit ergot (5), grâce à laquelle celui-ci bascule en tournant sur l'articulation de son montage, en libérant la dent d'extrémité (11) du levier (4), de sorte que celui-ci peut alors être basculé vers le bas, ce qui fait que le picot (10) du levier (4) sort de l'emboîtement dans le support (1), en même temps qu'il effectue une poussée qui oblige le pilier (2) à se séparer de la plate-forme dans laquelle est fixée le support (1).

Pour la manipulation du levier (4) dans les actionnements de fermeture et d'ouverture de l'ancrage du pilier (2), ledit levier (4) est pourvu d'un usinage (22) en forme de poignée.

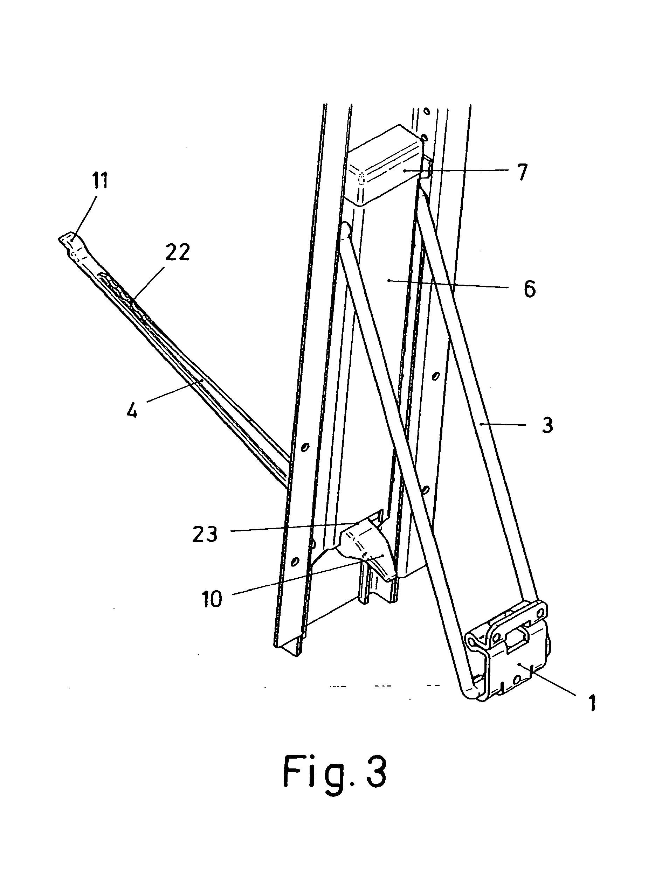

Pour limiter la chute du levier (4) lors du basculement d'ouverture, la plaque (6) de montage définit un bord inférieur (23), dans lequel le picot (10) sert de butée lors dudit basculement du levier (4), comme cela est représenté sur la figure 3.

La forme décrite du montage du mécanisme est une réalisation préférée, mais non limitative, puisque de la même façon, selon le concept de l'invention, le levier (4) pourrait être articulé par rapport à l'élément basculant (3).

## Revendications

1. Fermeture d'ancrage, pour piliers de plates-formes de chargement de véhicules, qui comprend un élément basculant (3) articulé par rapport au pilier (2) de l'application, pour réaliser un appui pivotant sur un support fixe (1) d'ancrage du pilier (2), le mécanisme de la fermeture d'ancrage comprend un levier (4) articulé par rapport au pilier (2), **caractérisé en ce que** le levier (4) définissant au niveau de son extrémité proche de l'articulation du montage, un picot (10) avec lequel il peut s'accrocher au support fixe (1) pour bloquer la fermeture de l'ancrage, tandis que l'autre extrémité dudit levier (4) définit une dent (11) au moyen de laquelle il peut s'accrocher à un ergot (5) de maintien dans la position de fermeture.

2. Fermeture d'ancrage, pour piliers de plates-formes de chargement de véhicules, selon la première revendication, **caractérisé en ce que** l'ergot (5) est articulé par rapport au pilier (2) et comporte une dent (16) avec un bord incliné sur la partie extérieure, contre lequel la dent (11) du levier (4) s'appui de manière coulissante, pour parvenir à la position de fixation par simple poussée.

3. Fermeture d'ancrage, pour piliers de plates-formes de chargement de véhicules, selon la première revendication, **caractérisé en ce que** le support fixe (1) définit des sièges (19) pour l'appui pivotant de l'élément basculant (3) et, au sommet desdits appuis (19), une ouverture (21) pour l'insertion du picot (10) du levier (4) lors du blocage de la fermeture.

4. Fermeture d'ancrage, pour piliers de plates-formes de chargement de véhicules, selon la première et la troisième revendications, **caractérisé en ce que** l'élément basculant (3) définit au niveau de son extrémité d'appui sur le support fixe (1) un pliage central (14), au moyen duquel il sert de butée pour le picot (10) du levier (4) dans la position fermée de l'ancrage, assurant la fixation de l'élément basculant (3) dans les sièges (19) d'appui.

5. Fermeture d'ancrage, pour piliers de plates-formes de chargement de véhicules, selon la première revendication, **caractérisé en ce que** le mécanisme de la fermeture d'ancrage est monté sur une plaque accessoire (6), sur laquelle on incorpore dans une articulation l'élément basculant (3) avec l'ergot (5) et dans une autre articulation le levier (4), ladite plaque (6) étant ancrée et fixée de préférence de manière rivetée sur le pilier (2) de l'application.

## Claims

1. Anchoring closure, for pillars of vehicle loading platforms, which comprises a tilting member (3) articulated to the pillar (2) of the application, in order to produce a support pivoting on a fixed anchoring support (1) for the pillar (2), the mechanism of the anchoring closure comprises a lever (4) articulated to the pillar (2), **characterised in that** the lever (4) defining, in the area of its end close to the articulation of the mounting, a spike (10) with which it can hook on to the fixed support (1) in order to lock the closure of the anchorage, while the other end of said lever (4) defines a tooth (11) by means of which it can hook on to a holding lug (5) in the closed position.

2. Anchoring closure, for pillars of vehicle loading platforms, according to the first claim, **characterised in that** the lug (5) is articulated with regard to the pillar (2) and comprises a tooth (16) with an inclined edge on the outer part, against which the tooth (11) of the lever (4) bears in a sliding manner, in order to reach the fixed position by simple pushing.

3. Anchoring closure, for pillars of vehicle loading platforms, according to the first claim, **characterised in that** the fixed support (1) defines seats (19) for the pivoting support of the tilting member (3) and, at the top of said supports (19), an opening (21) for inserting the spike (10) of the lever (4) when the closure is locked.

4. Anchoring closure, for pillars of vehicle loading platforms, according to the first and third claims, **characterised in that** the tilting member (3) defines, in the area of its end bearing on the fixed support (1), a central bend (14) by means of which it serves as a stop for the spike (10) of the lever (4) in the closed position of the anchorage, fixing the tilting member (3) in the support seats (19).

5. Anchoring closure, for pillars of vehicle loading platforms, according to the first claim, **characterised in that** the mechanism of the anchoring closure is mounted on an ancillary plate (6), on which the tilting member (3) together with the lug (5) are incorporated into one articulation and the lever (4) into another articulation, said plate (6) being anchored and fixed, preferably by riveting, to the pillar (2) of the application.

## Patentansprüche

1. Verankerungsverschluß für Säulen von Fahrzeug-Ladeplattformen, welcher ein schwenkbares Element (3) umfaßt, das bezogen auf die Säule (2) der Anwendung mit einem Gelenk versehen ist, um eine drehbare Abstützung an einem festen Verankerungsträger (1) der Säule (2) herzustellen, wobei der Mechanismus des Verankerungsverschlusses einen bezogen auf die Säule (2) mit einem Gelenk versehenen Hebel (4) umfaßt, **dadurch gekennzeichnet, daß** der Hebel (4) im Bereich seines Endes in der Nähe des Gelenks der Anordnung einen Spitzkeil (10) definiert, mit dem er sich am festen Träger (1) einhängen kann, um den Verankerungsverschluß zu blockieren, während das andere Ende des genannten Hebels (4) einen Zahn (11) definiert, mittels dessen er sich an einer Nase (5) zum Halten in der Verschlußposition einhängen kann.

2. Verankerungsverschluß für Säulen von Fahrzeug-Ladeplattformen nach Anspruch 1, **dadurch gekennzeichnet, daß** die Nase (5) bezogen auf die Säule (2) mit einem Gelenk versehen ist und einen Zahn (16) mit einem geneigten Rand am äußeren Teil aufweist, gegen den sich der Zahn (11) des Hebels (4) verschiebbar stützt, um durch einfaches Drücken in die Befestigungsposition zu gelangen.

3. Verankerungsverschluß für Säulen von Fahrzeug-Ladeplattformen nach Anspruch 1, **dadurch gekennzeichnet, daß** der feste Träger (1) Sitze (19) für die drehbare Abstützung des schwenkbaren Elements (3) und am höchsten Punkt der genannten Abstützungen (19) eine Öffnung (21) zum Einführen des Spitzkeils (10) des Hebels (4) beim Blockieren des Verschlusses definiert.

4. Verankerungsverschluß für Säulen von Fahrzeug-Ladeplattformen nach Anspruch 1 und 3, **dadurch gekennzeichnet, daß** das schwenkbare Element (3) im Bereich seines Endes zum Abstützen am festen Träger (1) eine zentrale Krümmung (14) definiert, mittels derer es als Anschlag für den Spitzkeil (10) des Hebels (4) in der geschlossenen Verankerungsposition dient, wodurch die Befestigung des schwenkbaren Elements (3) in den Abstützungssitzen (19) gewährleistet wird.

5. Verankerungsverschluß für Säulen von Fahrzeug-Ladeplattformen nach Anspruch 1, **dadurch gekennzeichnet, daß** der Mechanismus des Verankerungsverschlusses auf einer zusätzlichen Platte (6) montiert ist, auf der das schwenkbare Element (3) mit der Nase (5) in ein Gelenk und der Hebel (4) in ein anderes Gelenk integriert werden, wobei die genannte Platte (6) vorzugsweise durch Nieten an der Säule (2) der Anwendung verankert und befestigt ist.
